# EUROPEAN PATENT SPECIFICATION

(11) **EP 2 264 424 B1**
(45) Date of publication and mention of the grant of the patent: **21.08.2013**
(21) Application number: 09163296.8
(22) Date of filing: 19.06.2009
(51) Int. Cl.: G01N 1/28, B01L 3/00

(54) **Centrifugation assembly with twist-fit connection**
Zentrifugationseinheit mit Twist-fit-Verbindung
Ensemble de centrifugeuse avec connexion par encliquetage à rotation

(43) Date of publication of application: 22.12.2010
(73) Proprietor: Switch bvba, 9890 Gavere (BE)
(72) Inventor: Magniette, Olivier, 9831 Deurle (BE)
(74) Representative: Brants, Johan P.E.

(56) References cited:
- EP-A1- 0 590 506
- EP-A1- 0 595 759
- DE-U1- 9 104 438

## Description

### Field of the invention

The present invention relates to a centrifugation assembly with twist-fit connection. The present invention further relates to a sample chamber connectable to a carrier plate with a twist-fit connection. The invention further relates to a kit of parts to obtain such a centrifugation assembly. The present invention further relates to a method for obtaining a centrifugation assembly with said sample chamber. The present centrifugation assembly and sample chamber can advantageously be used in methods of cytodiagnostic investigation, in particular for the coating of slides with a sedimentation product of a sample fluid.

### Background

In a cytodiagnostic method cells that require an investigation are deposited on a slide, e.g. a glass slide, by subjecting a sample comprising cells to a centrifugation process. For carrying out such a technique, sample chambers for use in a centrifugation assembly, may be used. The technique may involve the positioning of a slide underneath a sample chamber, filling the chamber with the test sample and subjecting the chamber to a centrifuging process. During the centrifuging process the cells migrate in the fluid under the influence of the centrifugal force exerted on them toward the slide, and are deposited in the form of a sediment. Subsequently, the slide can be removed and optically examined.

Various types of sample chambers have been reported in the prior art. For instance, EP 0124883 discloses a centrifugal chamber wherein the detachable connection between the upper part of the centrifugal chamber and the carrier plate supporting the object carrier consists of a locking slide with locking recesses which is movable along its longitudinal axis or revolving and which is provided to be connected with associated said locking recesses engaging locking parts of the upper part. Whereas EP 0124883 provides a locking mechanism, the document remains silent about measures to prevent sample leakages and solvent loss. In addition, the need for a separate equipment part to provide locking makes sample processing time consuming.

In US 4612873 a centrifugal chamber is described consisting of a sample chamber mounted on a slide and sealed off by sealing rings. The centrifuge chamber is clamped by means provided on the side of a carrier plate. As the centrifugal chamber contains a plurality of bores disposed parallel to one another, clamping may not act evenly on the sealing rings. The manufacturing of the multi-chamber device will be complex and costly.

In EP 0595759, a sample carrier in the form of an angular pipe is clamped onto a clamping plate bearing a slide, by means of a rotatable clamping ring. The clamping ring fits with the clamping plate. It is used as a separate component to avoid rotation of the angular pipe. The upper part of the centrifugation assembly comprising the angular pipe, is secured against rotation on the clamping plate. The execution of the sample chamber is complex. A thin walled clamping ring will be sensitive to deformation. The sample chamber is asymmetric preventing the clamping ring of providing an evenly distributed clamping force.

In DE 09107153U1, a centrifugation chamber with an absorption body is provided which is releasable connectable to a carrier plate by means of a screw thread such as present in a nut. A screw thread can be damaged when the connection to the carrier plate is made too tight.

"EP 0 590 506 describes an assembly for depositing cytological material on a slide comprising a tube assembly and a baseplate. The tube assembly includes an elongated hollow tube and a base member at the bottom end of the tube projecting outwards. A flange extends outward from the base member perpendicular to the longitudinal axis of the tube. A baseplate has a recessed area to receive a microscope slide. A slot on the baseplate receives the flange, and a passage extends from the slot and releasably secures the flange to the baseplate when the tube assembly is rotated.

DE 91 04 438 discloses a centrifugation assembly comprising a chamber mountable to a glass slide by means of a clamping system.

In EP 0 595 759 a centrifugal chamber is disclosed, comprising a chamber containing the sample liquid and a clamping device with which the upper section can be clamped to a fixing plate. A sample carrier (12) on which the sample liquid is to be deposited is mounted in a sealed manner between the upper section and the fixing plate."

In view of the above, it is clear that there remains a need in the art for providing improved equipment, which is easier to manufacture and use. It is therefore an object of the present invention to provide a sample chamber and a centrifugation assembly which solves at least some of the above-mentioned problems.

### Summary

The present invention provides thereto a centrifugation assembly with a twist-fit connection. It is particularly suitable for coating slides with a sedimentation product of a sample fluid.

In particular, the invention relates to a sample chamber adapted for use in a centrifugation assembly (11) suitable to releasably attach a carrier plate (12) and a microscope slide (13) according to claim 1.

The inventor found that providing locking means and sealing means in substantially the same horizontal plane and in close proximity of each other is advantageous to obtain an air-tight and fluid tight engagement of the sample chamber to a slide, present on a carrier plate. The position for the extending rim at the bottom end of the sample chamber was found advantageous for the material consumption required to produce a carrier plate. Should the clamping means be provided in a location higher up, a carrier plate with a higher edge would have been required.

The inventor found that a sample chamber according to an embodiment of the invention is particularly advantageous for use in a centrifugation assembly. It allows the sample chamber to be rotationally connected, that is, with a twist fit connection. The extending rim provided with locking means and sealing means provides an attachment mechanism whereby the sample chamber moves between a first rotational position detached from the carrier plate, and a second rotational position to attach the sample chamber to the carrier plate of a centrifugation assembly. Positioning the sample chamber on a slide and connecting the sample chamber to the carrier plate, results in the activation and tightening of the sealing means. This leads to a fluid tight engagement of the sample chamber. The elongated chamber, locking means ad sealing means are integrated into one part. This reduces the number of parts required to put together a centrifugation assembly.

a sample chamber according to the invention, the locking means (5) are wedge-shaped. Locking means in the form of a wedge were found to be particularly suitable for obtaining a fluid tight engagement of the sample chamber to a carrier slide in a centrifugation assembly. Furthermore, they allow a clamping force to be built up gradually. The use of screw threads or bolts which are sensitive to deformation when too high a force is applied, can be avoided.

In an embodiment of a sample chamber according to the invention, the sample chamber (1) is obtained by co-extrusion or co-moulding. Manufacturing techniques such as co-extrusion or co-moulding allow a sample chamber to be produced in a single manufacturing step. This leads to the availability of sample chambers at an affordable price.

In an embodiment of a sample chamber according to the invention, the sample chamber (1) comprises a tubular chamber made of a synthetic material selected from polypropylene (PP), styrene acrylonitrile polymer (SAN), polycarbonate and said extending rim (7) is made of a synthetic material selected from polyamide (PA), acrylonitrile butadiene styrene (ABS) and polycarbonate-ABS blends (PC-ABS). In an embodiment of a sample chamber according to the invention, said sealing means (6) are made of an elastic material. Preferably the elastic material is selected from rubber, silicon rubber, liquid silicon elastomers (TPO), styrene-butadiene-styrene polymer. This selection of materials was found to provide a sample chamber with improved vibrational resistance.

In another aspect the invention provides a carrier plate adopted to receive a sample chamber as described above.

In an embodiment of a carrier plate according to the invention, the locking means (5) cooperate in form-matching means (15) provided on the carrier plate. This is advantageous to obtain a good fit between the different parts of the centrifugation assembly. The sample chamber will not rattle during the centrifugation process.

In another aspect the invention provides a centrifugation assembly (11), comprising a sample chamber and/or a carrier plate as described above. The centrifugation assembly of the invention has the advantage that it is connectable to a carrier plate of a centrifugation assembly by a twist-fit connection. A twist connection allows an easy assembly of carrier plate, sample carrier and sample chamber. As the extending rim is an integral part of the tubular chamber there is no need for a separate means for clamping and the number of components for obtaining a centrifugation assembly is reduced.

In an embodiment of a centrifugation assembly according to the invention, the sealing means (6) are adapted to fluid tight engagement of the sample chamber (1) to a microscope slide (13) present in the centrifugation assembly (12).

In an embodiment of a centrifugation assembly according to the invention, the sealing means (6) are made of an elastic material.

In an embodiment of a centrifugation assembly according to the invention, the carrier plate (12) is provided with positioning lips (16) adapted to engage and position the extending rim (7) of the sample chamber (1).

In another aspect, the invention further provides a centrifugation assembly according to claim 8. and/or carrier plate according to claim 7 and/or sample chamber according to claim 6, as described above, adapted for a single use. This is advantageous for obtaining an optimum fluid tight engagement. Single use sample chambers and carrier plates are not sensitive to wear. Single use equipment need not be cleaned after use. This reduces the consumption of cleaning fluids and disinfection products. It also saves time. Furthermore it avoids that product traces remain which upon re-use of a part could lead to false test results. Single use sample chambers and carrier plates provide increased method reliability.

In another aspect, the invention further provides a kit of parts of a centrifugation assembly (11) according to claim 12 comprising a sample chamber as described above and a releasable carrier plate adapted for form-matching receipt of the sample chamber. Sample chambers and carrier plates can be provided as separate equipment and assembled, e.g. in a histology lab.

In another aspect, the invention provides a method for obtaining a centrifugation assembly (11) according to claim 13.

With this method a twist fit connection is obtained. The parts of a kit for a centrifugation assembly can be put together easily, even with one hand.

The present invention will be described in greater detail below with reference to the drawings showing a preferred embodiment. Additional features and advantages of the invention are apparent from the drawings and their description.

### Description of the figures

**FIG. 1** is a perspective view of an embodiment of a sample chamber 1 according to the present invention, depicting an open ended top serving as filling opening 3, an elongated part or tube 2, an extending rim 7 and locking means 5 in the form of a wedge.
**FIG. 2A** is a top view of the sample chamber 1 as represented in FIG. 1.
**FIG. 2B** is a cross-sectional view along the line AA of FIG. 2A.
**FIG. 2C** is a cross-sectional view along the line BB of FIG. 2A.
**FIG. 3** is a perspective view of an embodiment of a sample chamber according to the present invention, illustrating the sealing means 6. The bottom end 7 of the sample chamber is facing upwards.
**FIG. 4** is a top view of the sample chamber 1 as represented in FIG. 3.
**FIG. 5** is a schematic representation of kit of parts for a centrifugation assembly according to an embodiment of the invention. The kit of parts comprises a carrier plate 12, a microscope slide 13 and a sample chamber 1. The assembly of the kit of parts to obtain a centrifugation assembly is depicted in Figures 5 A-C.
**FIG. 5A** represents a carrier plate 12, a microscope slide 13 and a sample chamber 1 in a disassembled state.
**FIG. 5B** represents the carrier plate 12 provided with a microscope slide 13 and a sample chamber 1 in unlocked position.
**FIG. 5C** represents a carrier plate with microscope slide and sample chamber in a locked and sealed position.

### Detailed description

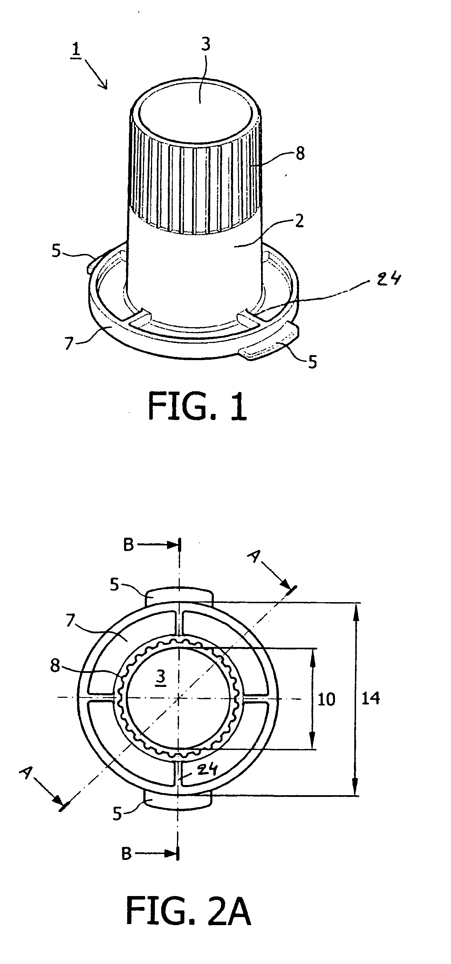

Referring now to the drawings wherein like reference numerals are used throughout the various views to designate like parts and, more particularly, to **FIGS. 1 to 5****,** according to these figures, a sample chamber 1 comprises a shaft 2, an open top end 3 and an open bottom end 4.

In **FIGS.1 to 4** a preferred embodiment of the invention is depicted. It concerns a tubular shaped sample chamber 1. The sample chamber 1 has an open top end 3 and an open bottom end 4. At the bottom end 4 the sample chamber 1 is provided with an extending rim 7. The extending rim 7 is provided with both locking means 5 and sealing means 6.

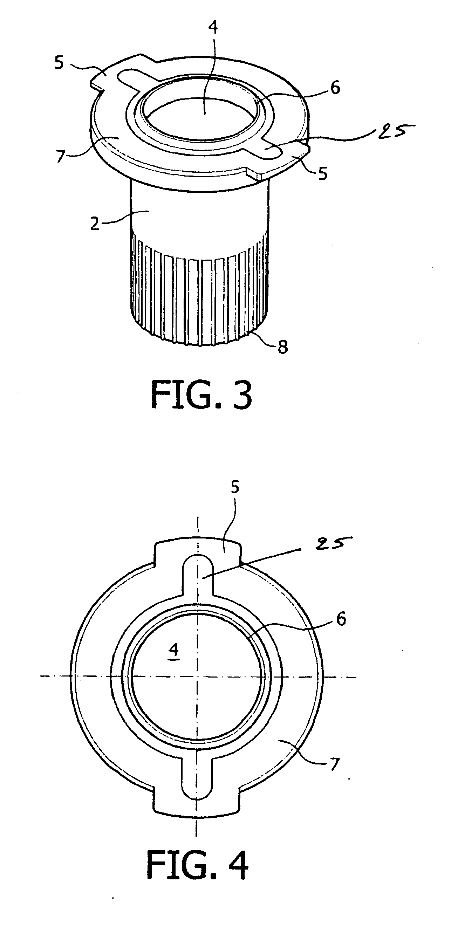

The locking means 5 are provided on the circumference of the extending rim 7. As can be seen in **FIG. 1** **and** **FIG. 3****,** wedge shaped protrusions 5 are provided on the edge of the rim. The wedge shaped protrusions are diametrically opposing one another on the extending rim. Their longitudinal axes are parallel and perpendicular to the longitudinal axis 9 of the sample chamber 1. The wedge shapes are essentially similar. Upon clockwise turning of the sample chamber around its longitudinal axis the wedge shapes are positioned so that the tips run at the front.

The sample chamber 1 is further provided with sealing means 6 on the extending rim 7. They are provided at the bottom end. In **FIG. 3** the sealing means 6 are annular, that is they are positioned around the circumference of the bottom end 4 as a ring.

The sample chamber 3 is an open sample chamber adapted to contain the sample fluid. Preferably, the sample chamber is a hollow tubular chamber 2, having an open top end 6 for receiving the sample fluid and an open bottom end 7. Preferably the sample chamber is cylindrical, and thus circular in cross section, although the chamber may also adopt another cross-sectional configuration; and for instance be polygonal in cross section. In a preferred embodiment, the sample chamber may be cylindrical, whereby the diameter of the top end 6 of the chamber 3 is essentially equal to the diameter of the bottom end 7 of the chamber 3. The sample chamber may have gripping means 8. Examples of suitable gripping means are ribs, knobs. Preferably, the sample chamber, at its exterior is provided with gripping means as depicted in **FIG. 1** and **3****.**

The sample chamber 3 is preferably made of a synthetic material. In an embodiment, the elongated part or tube 2 of the sample chamber 1 is made of a synthetic material such as polypropylene (PP), styrene acrylonitrille polymer (SAN) or polycarbonate. These materials have good mechanical characteristics and are cheap.

In another preferred embodiment, the extending rim of the sample chamber 7 is made of a synthetic material, such as polyamide (PA), acrylonitrille butadiene styrene (ABS) or polycarbonate-ABS blends (PC-ABS).

In another preferred embodiment, the sealing ring 6 is made of an elastic material. An elastic material provides adhesion to a sample slide. The use of an elastic material provides a fluid resistant seal. The seal is liquid and/or air-tight. The elastic material provides vibration damping properties. The risk of breakage of the clamped in slide is reduced. Elastic material such as rubber is resistant to a range of solvents, such as for instance alcohol.

Suitable elastic materials are materials such as rubber, silicon rubber, liquid silicon rubber, styrene-ethylene-butylene-styrene polymers (SEBS), olefinic thermoplastic elastomers (TPO) or styrene-butadiene-styrene polymers (SBS). Preferably the elastic material is selected from the list comprising rubber, silicon rubber, liquid silicon rubber, styrene-ethylene-butylene-styrene polymers (SEBS), olefinic thermoplastic elastomers (TPO) or styrene-butadiene-styrene polymers (SBS).

In an embodiment of the invention the sample chamber 1 and extending rim 7 are made of a synthetic material and the sealing ring is made of an elastic material. This is advantageous for obtaining a sample chamber which has good vibrational resistance. Forces exerted on a sample chamber of the invention are dampened. The sample chamber has good mechanical characteristics and is wear resistant. It is inert and does not react with most chemicals.

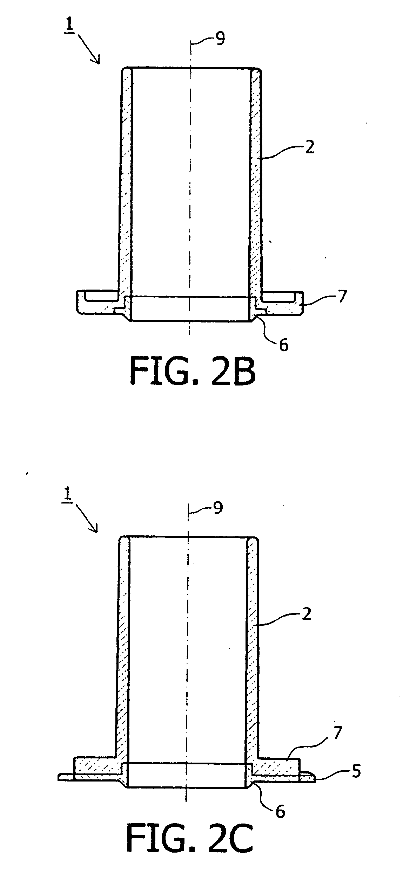

Preferably the rim 7 provided with the sealing ring 6 is obtained by co-extrusion or co-moulding. In FIG. 2A, B and C assemblies of an elongated shaft 2, extending rim 7 and wedges 5 are depicted. In FIG. 2B and 2C the different parts are distinguishable by the different hatchings in the figure.

In an embodiment of the invention the extending rim 7 is provided with radial beams 24. In an embodiment of the invention the sealing means are executed as depicted in Figure 3. A first ring with inner diameter corresponding to the inner diameter of the sample chamber and outer diameter corresponding to the outer diameter of the sample chamber protrudes from the lower surface 7 of the extending rim by about 1 mm. A second ring is provided with two lips 25. The lips are each situated below a radially extending beam 24 on the extending rim. The lips reach as far as the outer diameter of the extending rim 7. In a preferred embodiment of the invention, a sample chamber is provided with annular sealing means with at least two lips 25.

The sample chamber is preferably executed as part of a centrifugation assembly 11. In particular, the sample chamber is executed as a set-up for the coating of slides with a sedimentation product of a sample fluid.

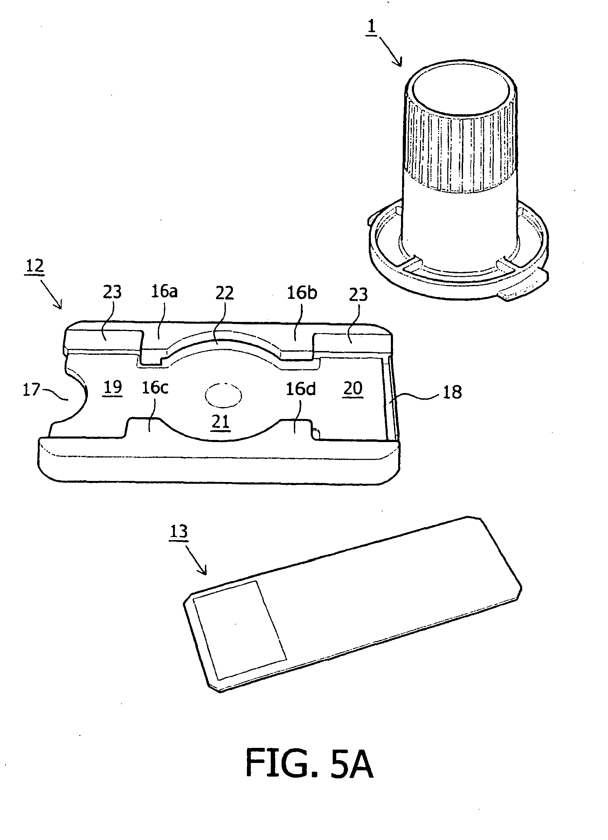

In a further aspect, the invention provides a centrifugation assembly. In a further aspect of the invention a carrier plate is provided. In an embodiment of the invention a centrifugation assembly and/or carrier plate are as depicted in **FIG. 5A****.**

The centrifugation assembly consists of a slide 13, a carrier plate 12 and a sample chamber 1. The carrier plate 12 essentially consists of two opposite flanges 19, 20, between which the sample chamber 1 can be positioned.

In an embodiment of a centrifugation assembly according to the invention, the carrier plate is provided with positioning lips adapted to engage and position the extending rim of the sample chamber. The positioning lips restrict the movement of the sample chamber in a horizontal direction. Furthermore, positioning of the sample chamber in between the positioning lips, results in a positioning of the locking means suitable for clamping. By rotating the longitudinal axis of the sample chamber and consequently also the extending rim, the sealing means on the extending rim are brought to cooperate with form-matching means provided on the centrifugation means.

In an embodiment of the invention the carrier plate with positioning lips is as depicted in **FIG. 5A****.** The carrier plate 12 consists of an essentially rectangular ground plate 17 provided with positioning lips 16a, 16b, 16c, 16d adapted to engage and position a slide on the carrier plate 12. These lips which are positioned symmetrically towards one another on opposite sides of the plate define together with the ground plate 17 a groove 22 adapted to receive a slide, preferably in longitudinal directions of the carrier plate.

The carrier plate 12 may further be provided with lateral edges 23 which are at least partly inclined towards the ground plate 17 of the carrier plate 12, preferably under an inclination angle of for instance with between 20° to 50°, and for instance of 30, 40 or 45° with respect to a horizontal plane defined by the ground plate 17 of the carrier plate 12. The inclined edges of the carrier plate facilitate writing on a slide, which has been inserted onto the carrier plate.

The carrier plate 12 may also be provided with locking means, preferably a slit or aperture, which are adapted to receive a locking means 5 of the sample chamber 1. The slit of the carrier plate may be defined by a lateral lip 15, which is provided on a lateral edge of the carrier plate 12.

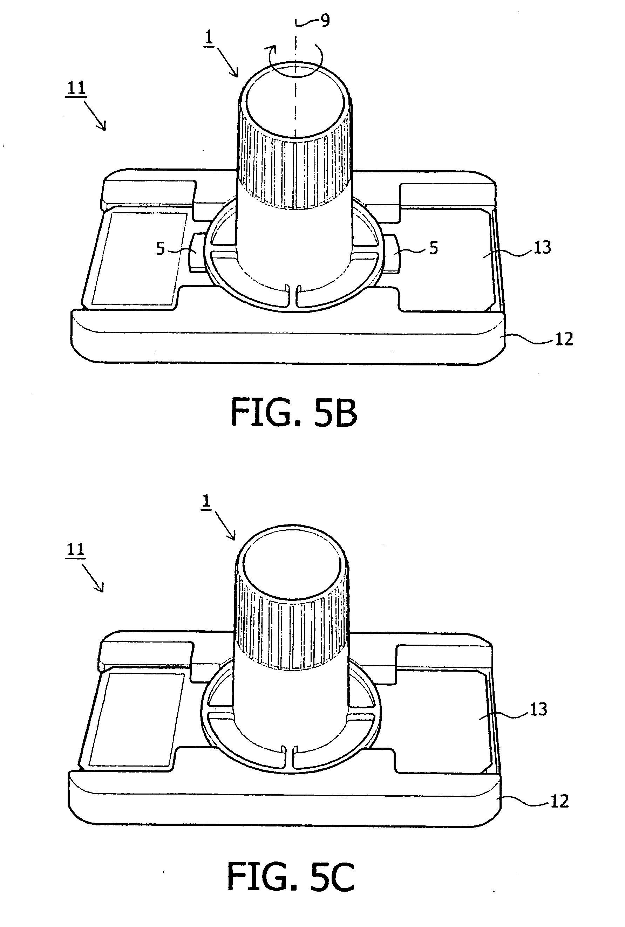

One side of the carrier plate 12 can be provided with a finger recess 17. The opposite side of the carrier plate is provided with an abutment 18, suitable for defining the maximal engagement position of a glass slide when engaged onto the carrier plate as illustrated on **FIG. 5****B.** The position of the lips on the ground plate permits to create a central surface having dimensions which are adapted to receive the extending rim 7 of the sample chamber 1.

In a further aspect, the invention provides a method for obtaining a centrifugation assembly. The method is illustrated by **FIGS. 5A** to **C.**

**FIG. 5B** illustrates the introduction of a slide 13 on the carrier plate 12. The slide, preferably a microscope slide, in the shape of a rectangular glass plate, can be disposed on the basis 21 of the carrier plate 12 as depicted in **FIG. 5****B.** The slide is held in place on the carrier plate by sliding it through a groove 22 defined by the lips 16a, 16b, 16c and 162d.

A sample chamber according to the invention is positioned onto the slide as depicted in **FIG. 5****B.** The bottom end 4 of the sample chamber 1, which is in contact with a slide present on the carrier plate 12, is provided with an extending rim 7. The bottom end 4 of the sample chamber 1 is provided with a sealing ring 6, which is adapted to fluid tight engagement of the sample chamber to a slide, present in said carrier plate. This sealing ring 6 is interposed between the bottom end 4 of the sample chamber and a slide applied on the carrier plate 12 so that no liquid can escape from the sample chamber during the centrifuging process.

The sample chamber can be positioned in between positioning means, here the lips 16 a, 16 b, 16 c, 16 d. The sealing means are positioned between the sample cylinder and the carrier slide.

The rim 7 is provided with a locking element, e.g. a wedge 5, on the outer periphery thereof, which can be rigidly clamped in a form-matching opening such as a slit. Preferably the form-matching opening is provided on the carrier plate 2 for form-matching receipt of the locking means.

The sample chamber is rotated around its longitudinal access in a clock-wise direction. The wedge-shaped locking means turn towards form-matching slits in the carrier plate. **FIG. 5C** illustrates the position of the sample chamber 1 on the carrier plate 12 after engagement of the wedge 4 into the lateral lip 15 of the carrier plate 12. Positioning of the locking means into the slit locks the sample chamber to the carrier plate. It also compresses the sealing means. The inventors found this twist-fit connection to be particularly advantageous for use in an assembly of an open bottomed sample chamber to a carrier slide, particularly as part of a centrifugation assembly.

In a further aspect, the invention provides a use of a sample chamber according to the invention as part of a centrifugation assembly. Use of a sample chamber of the invention provides improved vibrational resistance. This is particularly advantageous as part of a centrifugation assembly, which undergoes vibrations as it is put together and/or disassembled and during a centrifugation process.

The sample chamber and centrifugation assembly may be advantageously used for cytodiagnostic investigations of e.g. cells contained in a fluid sample. However, it will be clear that the present sample chamber may also by used in other applications, wherein a sedimentation products needs to be obtained of a sample fluid.

Particular advantages of the present sample chamber are that it provides an improved air-tight and liquid tight engagement of a sample chamber in a centrifugation assembly. It allows easy assembly of a kit of parts comprising the sample chamber into a centrifugation assembly due to the fit-lock connection system it provides. Use of the present assembly reduces the number of leakages and consequently need for repeat sample processing. Hence sample processing is simplified. Its cost reduced.

### Figure Legend

- 1: sample chamber
- 2: tubular chamber
- 3: filling opening
- 4: open bottom end
- 5: locking means
- 6: sealing ring
- 7: extending rim
- 8: gripping means
- 9: longitudinal axis of sample chamber
- 10: inner diameter
- 11: centrifugation assembly
- 12: carrier plate
- 13: microscope slide
- 14: outer diameter
- 15: lateral lip
- 16: positioning lips
- 17: finger recess
- 18: abutment
- 19, 20: two opposite flanges
- 21: basis of the carrier plate
- 22: groove
- 23: edge
- 24: radial beam
- 25: lip

## Claims

1. Sample chamber adapted for use in a centrifugation assembly (11) suitable to releasably attach a carrier plate (12) and a microscope slide (13) comprising a substantially tubular chamber (2) provided at its base with an extending rim (7), whereby said extending rim (7) is provided at its circumference with locking means (5) comprising a surface perpendicular to the longitudinal axis of said tubular chamber (2) and horizontal to the bottom surface of said extending rim (7); and whereby said tubular chamber is provided at its base with an annular sealing means (6) made of an elastic material, whereby said sealing means (6) is provided inside said cylindrical tubular chamber (2) and extending rim (7), **characterized in that** said locking means are wedge shaped and that said sample chamber is provided with annular sealing means with at least two lips (25) and said annular sealing means has a first diameter corresponding to the inner diameter (10) of said tubular chamber, a second diameter corresponding to the outer diameter of said tubular chamber and a third diameter corresponding to the outer diameter (14) of said extending rim (7).

2. Sample chamber according to claim 1, **characterized in that** two lips (25) are reaching as far as the outer diameter of the extending rim (7).

3. Sample chamber according to claim 1 or 2, **characterized in that** a first ring with inner diameter corresponding to the inner diameter of the sample chamber and outer diameter corresponding to the outer diameter of the sample chamber protrudes from the lower surface of the extending rim (7) by about 1 mm.

4. Sample chamber according to any of claims 1 to 3, **characterized in that** said sample chamber is obtained by co-extrusion or co-moulding.

5. Sample chamber according to claim 1 to 4, **characterized in that**, said sample chamber is made of a synthetic material selected from polypropylene (PP), styrene acrylonitrile polymer (SAN), polycarbonate and said extending rim (7) is made of a synthetic material selected from polyamide (PA), acrylonitrile butadiene styrene (ABS) and polycarbonate-ABS blends (PC-ABS).

6. Sample chamber according to any of claims 1 to 5, **characterized in that**, said elastic material is selected from rubber, silicon rubber, liquid silicon elastomers (TPO), styrenebutadiene-styrene polymer

7. Carrier plate (12) suitable for receiving a sample chamber (1) according to any of claims 1 to 6 and a microscope slide (13), said carrier plate comprising a rectangular ground plate (17) and positioning lips (16a, 16b, 16c, 16d) adapted to engage a microscope slide (13) on the carrier plate (12) and said sample chamber (1), wherein said positioning lips (16a, 16b,16c, 16d) positioned symmetrically towards one another on opposite sides of said carrier plate (12) define together with said ground plate (17) a groove (22) adapted to receive said microscope slide (13) and said carrier plate (12) is provided with locking means which are adapted to receive the locking means (5) of said sample chamber (1).

8. Centrifugation assembly (11), comprising a sample chamber (1) and a carrier plate (12) wherein said sample chamber (1) and said carrier plate (12) are according to any of the above claims.

9. Centrifugation assembly (11) according to claim 8, **characterized in that**, said sealing means (6) are adapted to fluid tight engagement of the sample chamber (1) to a microscope slide (13) present in said centrifugation assembly (12).

10. Centrifugation assembly (11) according to claim 8 or 9, **characterized in that**, the carrier plate (12) is provided with positioning lips (16) adapted to engage and position the extending rim (7) of the sample chamber (1).

11. Centrifugation assembly (11) as in any of claims 8 to 10 and/or carrier plate as in claim 7 and/or sample chamber as in any of claims 1 to 6, **characterized in that**, it is adapted for a single use.

12. kilt of parts of a centrifugation assembly (11) as in any of claims 8 to 11 comprising a sample chamber according to any of claims 1 to 6 and a releasable carrier plate adapted for form-matching receipt of the sample chamber.

13. Method for obtaining a centrifugation assembly (11) comprising the steps of:
a) providing a sample chamber (1) according to any of claims 1 to 6 and a carrier plate (12) according to claim 7,
b) introducing a slide (13) on said carrier plate (12),
c) positioning said sample chamber (1) on said slide (13),
d) rotatatively connecting said sample chamber (1) to said carrier plate (12).

14. Method according to claim 13, comprising the step of: co-extruding or co-moulding said sample chamber.

## Patentansprüche

1. Probenkammer, die an die Verwendung in einer Zentrifugationsanordnung (11) angepasst sowie dazu geeignet ist, dass eine Trägerplatte (12) und ein Mikroskopobjektträger (13) lösbar daran angebracht werden können, mit einer im Wesentlichen rohrförmigen Kammer (2), die an ihrer Basis mit einem abstehenden Rand (7) versehen ist, wobei der abstehende Rand (7) an seinem Umfang mit Verriegelungsmitteln (5) versehen ist, die eine Fläche umfassen, die senkrecht zu der Längsachse der rohrförmigen Kammer (2) und horizontal zu der Bodenfläche des abstehenden Rands (7) verläuft; und wobei die rohrförmige Kammer an ihrer Basis mit einem ringförmigen, aus einem elastischen Material hergestellten Dichtungsmittel (6) versehen ist, das innerhalb der zylindrischen rohrförmigen Kammer (2) und des abstehenden Rands (7) vorgesehen ist, **dadurch gekennzeichnet, dass** die Verriegelungsmittel keilförmig sind und dass die Probenkammer mit einem ringförmigen Dichtungsmittel mit mindestens zwei Lippen (25) versehen ist, wobei das ringförmige Dichtungsmittel einen ersten Durchmesser, der dem inneren Durchmesser (10) der rohrförmigen Kammer entspricht, einen zweiten Durchmesser, der dem äußeren Durchmesser der rohrförmigen Kammer entspricht und einen dritten Durchmesser, der dem äußeren Durchmesser (14) des abstehenden Rands (7) entspricht, hat.

2. Probenkammer nach Anspruch 1, **dadurch gekennzeichnet, dass** die beiden Lippen (25) bis zum äußeren Durchmesser des abstehenden Rands (7) reichen.

3. Probenkammer nach Anspruch 1 oder 2, **dadurch gekennzeichnet, dass** ein erster Ring mit einem inneren Durchmesser, der dem inneren Durchmesser der Probenkammer entspricht, und einem äußeren Durchmesser, der dem äußeren Durchmesser der Probenkammer entspricht, um ungefähr 1 mm von der unteren Fläche des abstehenden Rands (7) vorragt.

4. Probenkammer nach einem der Ansprüche 1 bis 3, **dadurch gekennzeichnet, dass** die Probenkammer durch Coextrusion oder Mitformung hergestellt ist.

5. Probenkammer nach einem der Ansprüche 1 bis 4, **dadurch gekennzeichnet, dass** die Probenkammer aus einem aus Polypropylen (PP), Styrol-Acrylnitril (SAN) und Polycarbonat ausgewählten synthetischen Material hergestellt ist und der abstehende Rand (7) aus einem aus Polyamid (PA), Acrylnitril-Butadien-Styrol (ABS) und Polycarbona-ABS-Gemischen (PC-ABS) ausgewählten synthetischen Material hergestellt ist.

6. Probenkammer nach einem der Ansprüche 1 bis 5, **dadurch gekennzeichnet, dass** das elastische Material aus Kautschuk, Silikonkautschuk, flüssigen Silikonelastomeren (TPO) und Styrol-Butadien-Styrol-Polymer ausgewählt ist.

7. Trägerplatte (12), die zur Aufnahme einer Probenkammer (1) nach einem der Ansprüche 1 bis 6 und eines Mikroskopobjektträgers (13) geeignet ist, wobei die Trägerplatte eine rechteckige Grundplatte (17) und Positionierungslippen (16a, 16b, 16c, 16d) umfasst, die geeignet sind, einen Mikroskopobjektträger (13) auf der Trägerplatte (12) und die Probenkammer (1) in Eingriff zu nehmen, wobei die Positionierungslippen (16a, 16b, 16c, 16d), die zueinander symmetrisch auf gegenüberliegenden Seiten der Trägerplatte (12) positioniert sind, zusammen mit der Grundplatte (17) eine Nut (22) definieren, die geeignet ist, den Mikroskopobjektträger (13) aufzunehmen, und die Trägerplatte (12) mit Verriegelungsmitteln versehen ist, die geeignet sind, die Verriegelungsmittel (5) der Probenkammer (1) aufzunehmen.

8. Zentrifugationsanordnung (11) mit einer Probenkammer (1) und einer Trägerplatte (12) nach einem der vorhergehenden Ansprüche.

9. Zentrifugationsanordnung (11) nach Anspruch 8, **dadurch gekennzeichnet, dass** die Dichtungsmittel (6) zu einer fluiddichten Ineingriffnahme der Probenkammer (1) mit einem Mikroskopobjektträger (13), die in der Zentrifugationsanordnung (12) vorliegen, geeignet sind.

10. Zentrifugationsanordnung (11) nach Anspruch 8 oder 9, **dadurch gekennzeichnet, dass** die Trägerplatte (12) mit Positionierungslippen (16) versehen ist, die geeignet sind, den abstehenden Rand (7) der Probenkammer (1) in Eingriff zu nehmen und zu positionieren.

11. Zentrifugationsanordnung (11) nach einem der Ansprüche 8 bis 10 und/oder Trägerplatte nach Anspruch 7 und/oder Probenkammer nach einem der Ansprüche 1 bis 6, **dadurch gekennzeichnet, dass** sie für einen einmaligen Gebrauch geeignet sind.

12. Kit enthaltend Teilen einer Zentrifugationsanordnung (11) nach einem der Ansprüche 8 bis 11 mit einer Probenkammer nach einem der Ansprüche 1 bis 6 und einer freigebbaren Trägerplatte, die zur formschlüssigen Aufnahme der Probenkammer geeignet ist.

13. Verfahren zum Erhalt einer Zentrifugationsanordnung (11) mit den folgenden Schritten:
a) Bereitstellen einer Probenkammer (1) nach einem der Ansprüche 1 bis 6 und einer Trägerplatte (12) nach Anspruch 7,
b) Einführen eines Objektträgers (13) auf die Trägerplatte (12),
c) Positionieren der Probenkammer (1) auf dem Objektträger (13),
d) drehmäßiges Verbinden der Probenkammer (1) mit der Trägerplatte (12).

14. Verfahren nach Anspruch 13, mit dem Schritt der Coextrusion oder des Mitformungs der Probenkammer.

## Revendications

1. Chambre d'échantillon adaptée pour être utilisée dans un ensemble de centrifugation (11) approprié pour fixer de manière amovible une plaque porteuse (12) et une lamelle de microscope (13) comprenant une chambre sensiblement tubulaire (2) pourvue à sa base d'un rebord de prolongement (7), moyennant quoi ledit rebord de prolongement (7) est pourvu à sa circonférence de moyens de verrouillage (5) comprenant une surface perpendiculaire à l'axe longitudinal de ladite chambre tubulaire (2) et horizontale par rapport à la surface inférieure dudit rebord de prolongement (7) ; et moyennant quoi ladite chambre tubulaire est pourvue à sa base d'un moyen d'étanchéité annulaire (6) constitué d'une matière élastique, moyennant quoi ledit moyen d'étanchéité (6) est prévu à l'intérieur de ladite chambre tubulaire cylindrique (2) et dudit rebord de prolongement (7), **caractérisée en ce que** lesdits moyens de verrouillage (5) ont la forme d'une cale et **en ce que** ladite chambre d'échantillon est pourvue d'un moyen d'étanchéité annulaire avec au moins deux lèvres (25) et ledit moyen d'étanchéité annulaire a un premier diamètre correspondant au diamètre interne (10) de ladite chambre tubulaire, un deuxième diamètre correspondant au diamètre externe de ladite chambre tubulaire et un troisième diamètre correspondant au diamètre externe (14) dudit rebord de prolongement (7).

2. Chambre d'échantillon selon la revendication 1, **caractérisée en ce que** deux lèvres (25) s'étendent jusqu'au diamètre externe du rebord de prolongement (7).

3. Chambre d'échantillon selon la revendication 1 ou 2, **caractérisée en ce qu'**une première anneau avec un diamètre interne correspondant au diamètre interne de la chambre d'échantillon et un diamètre externe correspondant au diamètre externe de la chambre d'échantillon dépasse de la surface inférieure du rebord de prolongement (7) d'environ 1 mm.

4. Chambre d'échantillon selon l'une quelconque des revendications 1 à 3, **caractérisée en ce que** ladite chambre est obtenue par coextrusion ou comoulage.

5. Chambre d'échantillon selon la revendication 1 à 4, **caractérisée en ce que** ladite chambre d'échantillon est constituée d'une matière synthétique sélectionnée parmi le polypropylène (PP), le polymère de styrène-acrylonitrile (SAN), le polycarbonate et ledit rebord de prolongement (7) est constitué d'une matière synthétique sélectionnée parmi le polyamide (PA), l'acrylonitrile- butadiène-styrène (ABS) et les mélanges d e polycarbonate-ABS (PC-ABS).

6. Chambre d'échantillon selon l'une quelconque des revendications 1 à 5, **caractérisée en ce que** ladite matière élastique est sélectionnée parmi le caoutchouc, le caoutchouc de silicone, les élastomères de silicone liquides (TPO), le polymère de styrène-butadiène-styrène.

7. Plaque porteuse (12) appropriée pour recevoir une chambre d'échantillon (1) selon l'une quelconque des revendications 1 à 6 et une lamelle de microscope (13), ladite plaque porteuse comprenant une plaque de base rectangulaire (17) et des lèvres de positionnement (16a, 16b, 16c, 16d) adaptées pour venir en prise avec une lamelle de microscope (13) sur la plaque porteuse (12) et ladite chambre d'échantillon (1), dans laquelle lesdites lèvres de positionnement (16a, 16b, 16c, 16d) positionnées de manière symétrique en direction les unes vers les autres sur des côtés opposés de ladite plaque porteuse (12) définissent conjointement avec ladite plaque de base (17) une rainure (22) adaptée pour recevoir ladite lamelle de microscope (13) et ladite plaque porteuse (12) est pourvue de moyens de verrouillage qui sont adaptés pour recevoir les moyens de verrouillage (5) de ladite chambre d'échantillon (1).

8. Ensemble de centrifugation (11), comprenant une chambre d'échantillon (1) et une plaque porteuse (12), dans lequel ladite chambre d'échantillon (1) et ladite plaque porteuse (12) sont selon l'une quelconque des revendications ci-dessus.

9. Ensemble de centrifugation (11) selon la revendication 8, **caractérisé en ce que** ledit moyen d'étanchéité (6) est adapté pour un engagement étanche aux fluides de la chambre d'échantillon (1) avec une lamelle de microscope (13) présente dans ledit ensemble de centrifugation (12).

10. Ensemble de centrifugation (11) selon la revendication claim 8 ou 9, **caractérisé en ce que** la plaque porteuse (12) est pourvue de lèvres de positionnement (16) adaptées pour venir en prise avec le rebord de prolongement (7) de la chambre d'échantillon (1) et le positionner.

11. Ensemble de centrifugation (11) selon l'une quelconque des revendications 8 à 10 et/ou plaque porteuse selon la revendication 7 et/ou chambre d'échantillon selon l'une quelconque des revendications 1 à 6, **caractérisés en ce qu'**ils sont adaptés pour un usage unique.

12. Kit d'éléments d'un ensemble de centrifugation (11) selon l'une quelconque des revendications 8 à 11 comprenant une chambre d'échantillon selon l'une quelconque des revendications 1 à 6 et une plaque porteuse amovible adaptée pour une réception de la chambre d'échantillon par complémentarité de formes.

13. Procédé permettant d'obtenir un ensemble de centrifugation (11) comprenant les étapes consistant à :
a) fournir une chambre d'échantillon (1) selon l'une quelconque des revendications 1 à 6 et une plaque porteuse (12) selon la revendication 7,
b) introduire une lamelle (13) sur ladite plaque porteuse (12),
c) positionner ladite chambre d'échantillon (1) sur ladite lamelle (13),
d) raccorder par rotation ladite chambre d'échantillon (1) à ladite plaque porteuse (12).

14. Procédé selon la revendication 13, comprenant l'étape consistant à : coextruder ou comouler ladite chambre d'échantillon.
